Europäisches Patentamt

European Patent Office

Office européen des brevets

(19)

(11) Veröffentlichungsnummer: **0 001 202 B1**

(12) **EUROPÄISCHE PATENTSCHRIFT**

(45) Veröffentlichungstag der Patentschrift: **06.05.81**

(51) Int. Cl.³: **A 01 F 25/20**

(21) Anmeldenummer: **78100428.8**

(22) Anmeldetag: **19.07.78**

(54) Flachsilofräse.

(30) Priorität: **28.09.77 DE 2743602**

(43) Veröffentlichungstag der Anmeldung:
**04.04.79 Patentblatt 79/7**

(45) Bekanntmachung des Hinweises auf die Patenterteilung:
**06.05.81 Patentblatt 81/18**

(84) Benannte Vertragsstaaten:
**BE CH FR GB LU NL SE**

(56) Entgegenhaltungen:
**DE - A - 2 435 137**
**DE - B - 2 225 783**
**FR - A - 2 298 233**
**GB - A - 1 197 091**
**GB - A - 1 383 046**
**US - A - 3 477 488**

(73) Patentinhaber: **Walker, Alfred**
**Stuttgarter Strasse 38**
**D-7141 Schwieberdingen (DE)**

(72) Erfinder: **Walker, Alfred**
**Stuttgarter Strasse 38**
**D-7141 Schwieberdingen (DE)**

(74) Vertreter: **Vogel, Georg**
**Auenweg 14**
**D-7141 Schwieberdingen (DE)**

Courier Press, Leamington Spa, England.

# Flachsilofräse

Die Erfindung betrifft eine Flachsilofräse mit einer an einem Gerätegestell vertikal verstellbaren Fräseinrichtung und einer die abgefräste Silage weiterleitenden Fördereinrichtung wobei sich die Fräseinrichtung über die gesamte Breite des Gerätegestelles erstreckt und vor dessen vertikaler Abschlußwand auf- und abbewegbar ist.

Eine Flachsilofräse dieser Art ist durch die DE - B - 22 25 783 bekannt. Diese bekannte Flachsilofräse wird als Zusatzgerät mit der Zapfwelle eines Traktors gekoppelt, wobei die Zapfwelle die Fräseinrichtung antreibt. Die abgefräste Silage fällt vor die vertikale Abschlußwand und wird von dort einem Gebläse zugeführt, das in Rohrleitungen die abgefräste Silage zu einem bereitstehenden Wagen weiterbefördert.

Diese bekannte Flachsilofräse befriedigt im Einsatz nicht, da sie viel Umrüstungsarbeit erfordert. Der Traktor muß wiederholt an das Zusatzgerät angekoppelt und wieder abgekoppelt werden, wenn mehrere Wagenladungen Silage aus dem Silo entnommen werden. Die abgefräste Silage neigt zur Bildung von Klumpen, die leicht zu Verstopfungen im Gebläse und der anschließenden Rohrleitungen führen können, was zu Betriebsstörungen Anlaß gibt. Außerdem hat diese Art der Weiterleitung der Silage den Nachteil, daß das Gebläse und die Rohrleitungen schlecht zugänglich und nur schwierig zu reinigen sind.

Die GB - A - 13 83 046 zeigt eine Silage-Schneidvorrichtung mit gegensinnigen Förderschnecken und dazwischen liegenden Schleuderschaufeln. Bei dieser Flachsilofräse ist die Schneideinrichtung von der Förderschnecke mit den dazwischen liegenden Schleuderschaufeln getrennt und wird getrennt angetrieben. Diese Förderschnecke erlaubt aber keine Weiterführung der abgefrästen Silage über Höhenunterschiede.

Es ist Aufgabe der Erfindung, eine Flachsilofräse der eingangs erwähnten Art zu schaffen, bei der mit wesentlich höherer Entnahmeleistung die abgefräste Silage auf direktem Weg über eine leicht zugängliche Fördereinrichtung einem zu beladenden Wagen zugeführt werden kann.

Diese Aufgabe wird nach der Erfindung dadurch gelöst, daß die Abschlußwand im mittleren Bereich als Sammelschacht mit einer darin angeordneten, senkrecht zur Abschlußwand gerichteten Fördereinrichtung ausgebildet ist und daß die Fräseinrichtung vor dem Sammelschacht mit Fräs- und Schleuderschaufeln versehen ist, an die sich zu beiden Seiten der Fräseinrichtung gegensinnig ausgerichtete Fräs- und Förderschnecken anschließen, die die abgefräste Silage in Richtung der Fräs- und Schleuderschaufeln fördern. Mit dieser Ausgestaltung der Fräseinrichtung wird gleichzeitig über die gesamte Breite des Gerätegestelles eine Schicht der Silage abgefräst und zwangsläufig dem in der Mitte der Abschlußwand eingebrachten Sammelschacht mit der Fördereinrichtung zugeführt. Die Fördereinrichtung im Sammelschacht leitet die abgefräste Silage aus der Vorrichtung heraus, so daß ein vor der Vorrichtung stehender Wagen direkt beladen werden kann.

Für die vertikale Führung der Fräseinrichtung an dem Gerätegestell ist nach einer Ausgestaltung vorgesehen, daß die Fräs- und Schleuderschaufeln und die Fräs- und Forderschnecken auf einer durchgehenden Welle angeordnet sind, die mit ihren Enden an Laschen drehbar gelagert sind, und daß diese Laschen Leitsteine tragen, die in U-förmigen Führungsschienen des Gerätegestelles vertikal verstellbar geführt sind. Dabei versteifen die Führungsschienen die Außenkanten der Abschlußwand und die offenen Aufnahmen der Führungsschienen sind nach außen gerichtet, so daß sie mit der Silage nicht in Berührung kommen und diese die Gleitbewegung der Gleitsteine nicht beeinträchtigt.

Der Antrieb der Fräseinrichtung ist nach einer Ausgestaltung so gelöst, daß die beiden Laschen mittels eines Trägers miteinander verbunden sind, daß auf dem Träger ein Elektromotor befestigt ist, daß auf der Antriebswelle des Elektromotors ein Antriebszahnrad drehfest festgelegt ist, daß auf der Welle der Fräseinrichtung ein Abtriebszahnrad drehfest festgelegt ist und daß das Antriebszahnrad und das Abtriebszahnrad über eine Antriebskette miteinander gekoppelt sind. Die Fräseinrichtung stellt daher eine autarke Einheit dar, so daß auf den Zapfwellenantrieb eines Traktors verzichtet werden kann. Die Umrüstzeiten bekannter Vorrichtungen entfallen.

Zur besseren Lagerung der gemeinsamen Welle der Fräseinrichtung ist nach einer weiteren Ausgestaltung vorgesehen, daß die Enden der Welle in Lagern drehbar gelagert sind, die auf den Laschen festgelegt sind.

Damit die Lagerstellen dieser Welle den Fräsvorgang nicht beeinträchtigen, ist nach einer Weiterbildung vorgesehen, daß die Laschen zur Mitte der Fräseinrichtung hin versetzt angeordnet sind und daß die Fräs- und Förderschnecke im Endbereich umfangsseitig in Fräselemente ausläuft, die das zugeordnete Lager der Welle übergreifen. Die auslaufenden Förderelemente der Fräs- und Förderschnecken sorgen dafür, daß die Silageschicht auch vor den Lagerstellen der Fräseinrichtung abgetragen und dem Sammelschacht zugeführt wird.

Damit auch im Bereich der Antriebskette vom Antriebszahnrad des Elektromotors zum Abtriebszahnrad auf der gemeinsamen Welle der Fräseinrichtung die Silage abgetragen wird, ist die Ausbildung so vorgenommen, daß die Antriebskette mit Fräs- und Förderelementen versehen ist, die die Antriebskette und das Abtriebszahnrad mit seiner Lagerbuchse übergreifen und die abgefräste Silage an die angrenzende Fräs- und Förderschnecke weiterleiten.

Selbstverständlich kann die Welle der Fräseinrichtung über ein Ende oder beide Enden angetrieben werden.

Die vertikale Verstellung der Fräseinrichtung wird nach einer Ausgestaltung dadurch erreicht, daß die Fräseinrichtung, insbesondere der Träger derselben, an beiden Enden mit Antriebsschleifen verbunden ist, die über Umlenkrollen geführt sind, daß je eine Umlenkrolle im Bereich der Unterkante und der Oberkante der Abschlußwand angeordnet ist und daß je eine Antriebsschleife im Bereich der Längskanten der Abschlußwand angebracht, sowie daß die beiden oberen Umlenkrollen auf einer gemeinsamen, am Gerätegestell gelagerten Welle drehfest angeordnet sind und daß diese Welle zusätzlich ein Abtriebszahnrad trägt, welches über eine Antriebskette, Zwischenzahnräder und eine weitere Antriebskette mit dem Antriebszahnrad eines Elektromotors gekoppelt ist. Die Vertikalbewegung der Fräseinrichtung kann dabei über an sich bekannte Endschalter begrenzt bzw. umgekehrt werden.

Die Ausgestaltung der Fördereinrichtung ist nach einer Ausführung so, daß als Fördereinrichtung ein Förderband verwendet ist, das in der Breite auf die Breite des Sammelschachtes abgestimmt ist, daß dieses Förderband über eine seiner Umlenkwellen im Bereich der Abschlußwand und im unteren Bereich des Sammelschachtes schwenkbar aufgehängt ist und daß das der Abschlußwand abgekehrt aus dem Sammelschacht schräg nach oben ragende Förderband über einen Seilzug und eine Seiltrommel in seiner Neigung zur Standfläche des Gerätegestelles einstellbar ist. Die Neigung des Förderbandes kann an die Höhe des zu beladenden Wagens angepaßt werden. Das Förderband ragt an der der Abschlußwand abgekehrten Seite so weit an der Vorrichtung vor, daß der zu beladende Wagen bequem untergestellt werden kann.

Da die Vorrichtung nach dem Abtragen einer Silageschicht verstellt werden muß, sieht eine Weiterbildung vor, daß das Gerätegestell mit Rädern fahrbar ausgestaltet ist und daß zumindest ein Teil dieser Räder blockier- und freigebbar sind. Dies wird dadurch noch erleichtert, daß ein Teil der Räder an einem Lenkgestell mit Deichsel angebracht sind und daß diese Räder über ein deichselgesteuertes Gestänge blockier- und freigebbar sind.

Die Erfindung wird anhand eines in den Zeichnungen dargestellten Ausführungsbeispiels näher erläutert. Es zeigen:

Figur 1 die Flachsilofräse in Seitenansicht,

Figur 2 die Flachsilofräse auf die Fräseinrichtung und die Abschlußwand mit dem Sammelschacht gesehen und

Figur 3 in vergrößerter Darstellung die Fräseinrichtung in Draufsicht.

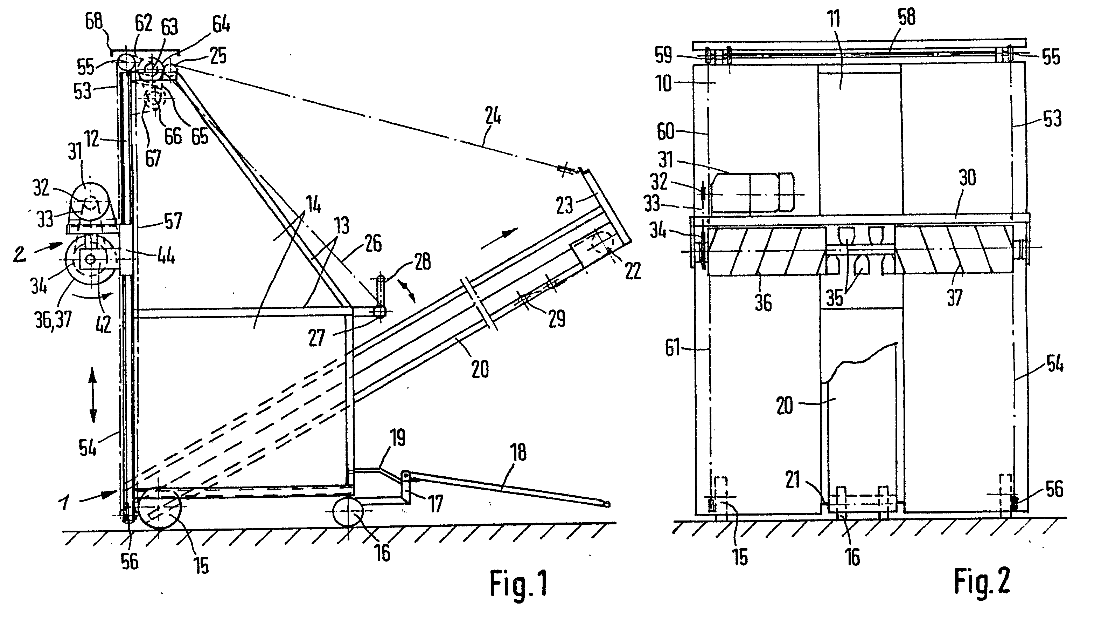

Die beiden Figuren 1 und 2 zeigen die Flachsilofräse in zwei Ansichten, welche die wesentlichsten Bauteile derselben erkennen lassen. Dem abzufräsenden Silageblock zugekehrt schließt die Flachsilofräse mit der geschlossenen Abschlußwand 10 ab, die im mittleren Bereich einen Sammelschacht 11 aufweist, welcher vertikal gerichtet und durch Seitenbleche 14 und Abdeckbleche begrenzt ist.

An den beiden Außenkanten der Abschlußwand 10 sind die vertikalen Führungsschienen 12 angebracht, die mit ihren offenen Aufnahmen nach außen gerichtet sind und zur Führung der vertikal auf- und abbewegbaren Fräseinrichtung 2, dienen. Die Abschlußwand 10, die Seitenbleche 14 und die Abdeckbleche der Flachsilofräse sind an dem Gerätegestell 1 befestigt, das wie die Bezugszeichen 13 andeuten, vorzugsweise aus Trägern besteht. Die gesamte Flachsilofräse ist fahrbar, da sie im Standbereich mit Rädern 15 und 16 versehen ist. Die beiden Räder 15 sind an den unteren Ecken der Abschlußwand 10 drehbar angebracht, während die beiden Räder 16 an einem Lenkteil 17 gelagert sind. An diesem Lenkteil 17 ist die Deichsel 18 angelenkt, die ein Gestänge 19 steuert. Dieses Gestänge 19 betätigt eine Feststellbremse für die Räder 16, so daß diese bei angehobener Deichsel 18 freigegeben, bei abgesenkter Deichsel 18 jedoch blockiert sind. Damit läßt sich die an den Silageblock herangefahrene Flachsilofräse so absichern, daß sie sich beim Fräsen nicht vom Silageblock wegbewegt.

Die Fräseinrichtung 2 enthält eine durchgehende Welle 51, die sich über die gesamte Breite der Abschlußwand 10 erstreckt. In dem Bereich vor dem Sammelschacht 11 trägt die Welle 51 Fräs- und Schleuderschaufeln 35, die radial und versetzt an der Welle 51 abstehen und sich in Längsrichtung der Welle 51 überlappen. Wird die Welle 51 in der Pfeilrichtung nach Fig. 1 gedreht, dann fräsen diese Fräs- und Schleuderschaufeln 35 die Silage ab und schleudern die abgefräste Silage in den Sammelschacht 11. Zu beiden Seiten des Sammelschachtes 11 schließen sich auf der Welle 51 die Fräs- und Förderschnecken 36 und 37 an, die die abgefräste Silage gleichzeitig noch in Richtung des Sammelschachtes 11 fördern. Die Flachsilofräse arbeitet daher über die gesamte Breite der Fräseinrichtung 2 und führt die abgefräste Silage zwangsweise dem in der Mitte angeordneten Sammelschacht 11 zu.

In dem Sammelschacht 11 ist ein Förderband als Fördereinrichtung 20 angeordnet und zwar so, daß die eine Umlenkwelle 21 im Bodenbereich des Sammelschachtes 11 und in der Ebene der Abschlußwand 10 gleichzeitig als Schwenkachse für das Förderband dient. Das Förderband steht an der Vorderseite schräg nach oben gerichtet aus dem Sammelschacht 11 vor, so daß der zu beladende Wagen leicht untergestellt werden kann. Das Untertrum des Förderbandes ist dabei durch ein von Stützrollen 29 getragenes Schutzband abgedeckt.

Das Förderband ist in der Breite auf die Breite des Sammelschachtes 11 abgestimmt und im Bereich der anderen Unlenkwelle 22 an der Stütze 23 über den Seilzug 24 aufgehängt. Der Seilzug 24 ist über die Umlenkrolle 25 und den Seilzug 26 zu der Seiltrommel 27 geführt, die über die Handkurbel 28 in beiden Drehrichtungen angetrieben werden kann. Auf diese Weise kann die Neigung des Förderbandes leicht verändert und an die Höhe des zu beladenden Wagens angepaßt werden.

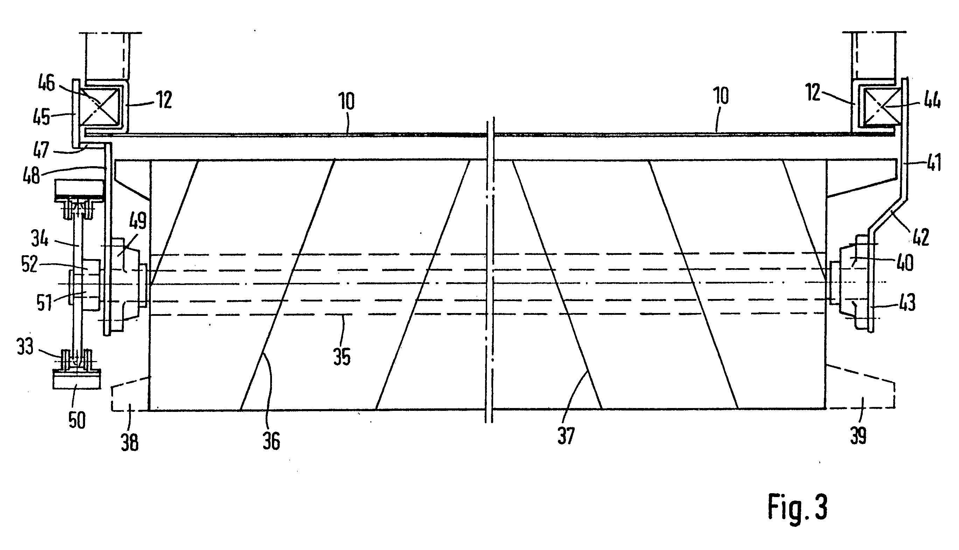

Damit die Fräseinrichtung 2 eine Silageschicht vom Silageblock abträgt, muß sie in vertikale Stellbewegungen versetzt werden. Dazu sind, wie Fig. 3 zeigt, die Enden der Welle 51 in Lagern 40 und 49 drehbar gelagert. Diese Lager 40 und 49 sind auf Laschen 43 und 48 befestigt. Diese Laschen 43 und 48 sind so abgewinkelt, daß die Wellenenden nicht seitlich über die Abschlußwand 10 vorstehen. Diese Abwinkelungen 42, 47 sind so, daß die Enden 41 und 45 der Laschen 43 und 48 vor den Aufnahmen der Führungsschienen 12 zu liegen kommen. Die Enden 41 und 45 der Laschen 43 und 48 tragen quaderförmige Gleitsteine 44 und 46, die in den Aufnahmen der Führungsschienen 12 vertikal verstellbar sind. Die beiden Laschen 43 und 48 sind über den Träger 30 miteinander verbunden. Der Träger 30 trägt einen Elektromotor 31, auf dessen Antriebswelle ein Antriebszahnrad 32 drehfest angeordnet ist. Das zugekehrte Ende der Welle 51 trägt drehfest das Antriebszahnrad 34, das über die Antriebskette 33 mit dem Antriebsrad 32 gekoppelt ist. Der Antrieb der Fräseinrichtung 2 ist daher autark und wird mit der Fräseinrichtung 2 vertikal verstellt. Selbstverständlich kann die Welle 51 der Fräseinrichtung 2 an beiden Enden so angetrieben werden. Dabei trägt die Antriebskette 34 schräggestellte Förderelemente 50, die die Antriebskette 33 und das Antriebszahnrad 34 mit seiner Lagerbuchse 52 übergreifen und die die Silageschicht vor der Antriebskette 33 abtragen und der angrenzenden Fräs- und Förderschnecke 36 zuleiten. Damit auch im Bereich der Laschen 43 und 48 die Silageschicht abgetragen wird, überragen die Fräs- und Förderschnecken 36 und 37 die Lager 40 und 49 mit Förderelementen 38 und 39, die nur im Bereich des Umfanges der Fräs- und Förderschnecken 36 und 37 angeordnet sind. Damit wird wirklich über die gesamte Breite des Abschlußbleches 10, d.h. der Flachsilofräse, die Silageschicht abgefräst und die gesamte abgefräste Silage zur Mitte gefördert, wo sie dann von den Fräs- und Schleuderschaufeln 35 in den Sammelschacht 11 geschleudert wird. Die in den Sammelschacht 11 geschleuderte Silage fällt auf das Förderband und wird von dem in Pfeilrichtung aus der Vorrichtung gefördert.

Der Träger 30 ist über zwei Antriebsschleifen an dem Gerätegestell 1 aufgehängt. Auf der Außenseite der Abschlußwand 10 tragen die Kettenteile 53 und 60 den Träger 30. Die Seilzüge 54 und 61 setzen sich über die unteren Umlenkrollen 56 auf der Rückseite der Abschlußwand 10 fort, wie das Bezugszeichen 57 erkennen läßt und sind mit den über die oberen Umlenkrollen 55, z.B. Zahnräder, Kettenteilen 53 und 60 verbunden. Die Zahnräder 55 sitzen auf der Welle 58 drehfest. Die Welle 58 trägt ein Abtriebsrad 59, das über die Antriebskette 62 die Zwischenzahnräder 63 und 64 auf einer Zwischenwelle und die Antriebskette 65 vom Antriebszahnrad 66 eines Elektromotors 67 angetrieben wird. Dieser Elektromotor 67 wird über an sich bekannte, an den Führungsschienen 12 bzw. dem Gerätegestell 1 angebrachten Endschaltern so gesteuert, daß die Fräseinrichtung 2 aus der obersten Stellung in die unterste Stellung läuft. Der Elektromotor wird dann in der Drehrichtung umgekehrt, so daß die Fräseinrichtung 2 wieder in die oberste Stellung angehoben wird. Der Elektromotor wird abgeschaltet und die Flachsilofräse steht für einen neuen Fräsvorgang bereit. Vorher muß jedoch die Flachsilofräse wieder soweit an den Silageblock herangeführt werden, daß beim Absenken der Fräseinrichtung 2, eine neue Silageschicht abgetragen wird.

Bei der vertikalen Verstellung der Fräsrichtung 2 stellen die Gleitsteine 44 und 46 und die beiden Antriebsschleifen eine unverkantete Führung sicher. Die Antriebsschleifen können dabei auch vollständig als Antriebsketten ausgebildet sein. In diesem Fall sind auch die unteren Umlenkrollen 56 als Zahnräder ausgebildet.

Das Abdeckblech 68 deckt die Antriebsmittel für die vertikale Verstellbewegung der Fräseinrichtung 2 ab.

**Patentansprüche**

1. Flachsilofräse mit einer an einem Gerätegestell (1) vertikal verstellbaren Fräsrichtung (2) und einer die abgefräste Silage weiterleitenden Fördereinrichtung (20), wobei sich die Fräseinrichtung (2) über die gesamte Breite des Gerätegestelles (1) erstreckt und vor dessen vertikaler Abschlußwand (10) auf und abbewegbar ist,
dadurch gekennzeichnet,
daß die Abschlußwand (10) in mittleren Bereich als Sammelschacht (11) mit einer darin angeordneten, senkrecht zur Abschlußwand (10) gerichteten Fördereinrichtung (20) ausgebildet ist und
daß die Fräseinrichtung (2) vor dem Sammelschacht (11) mit Fräs- und Schleuderschaufeln (35) versehen ist, an die sich zu beiden Seiten der Fräseinrichtung (2) gegensinnig ausgerichtete Fräs- und Förderschnecken (36, 37) anschließen, die die abgefräste Silage in Richtung der Fräs- und Schleuderschaufeln (35) fördern.

2. Flachsilofräse nach Anspruch 1, dadurch gekenzeichnet, daß die Fräs- und Schleuderschaufeln (35) und die Fräs- und Förderschnecken (36, 37) auf einer durchgehenden Welle (51) angeordnet sind, die mit ihren Enden an Laschen (43, 48) drehbar gelagert sind und daß diese Laschen (43, 48) Gleitsteine (44, 46) tragen, die in U-förmigen Führungsschienen (12) des Gerätegestelles (1) vertikal verstellbar geführt sind.

3. Flachsilofräse nach Anspruch 2, dadurch gekennzeichnet, daß die Führungsschienen (12) die vertikalen Außenkanten der Abschlußwand (10) versteifen und mit ihren offenen Aufnahmen nach außen gerichtet sind.

4. Flachsilofräse nach einem der Ansprüche 1 bis 3, dadurch gekennzeichnet, daß die beiden Laschen (43, 48) mittels eines Trägers (30) miteinander verbunden sind,

daß auf dem Träger (30) ein Elektromotor (31) befestigt ist,

daß auf der Antriebswelle des Elektromotors (31) ein Antriebszahnrad (32) drehfest festgelegt ist,

daß auf der Welle (51) der Fräseinrichtung ein Abtriebszahnrad (34) drehfest festgelegt ist und

daß das Antriebszahnrad (32) und das Abtriebszahnrad (34) über eine Antriebskette (33) miteinander gekoppelt sind.

5. Flachsilofräse nach Anspruch 2 bis 4, dadurch gekennzeichnet, daß die Enden der Welle (51) in Lagern (40, 49) drehbar gelagert sind, die auf den Laschen (43, 48) festgelegt sind.

6. Flachsilofräse nach einem der Ansprüche 2 bis 5, dadurch gekennzeichnet, daß die Laschen (43, 48) zur Mitte der Fräseinrichtung (2) hin versetzt angeordnet sind und daß die Fräs- und Förderschnecke (36, 37) im Endbereich umfangsseitig in Fräselemente (38, 39) ausläuft, die das zugeordnete Lager (40, 49) der Welle (51) übergreifen.

7. Flachsilofräse nach einem der Ansprüche 2 bis 5, dadurch gekennzeichnet, daß die Antriebskette (33) mit Fräs- und Förderelementen (50) versehen ist, die die Antriebskette (33) und das Abtriebszahnrad (34) mit seiner Lagerbuchse (52) übergreifen und die abgefräste Silage an die angrenzende Fräs- und Förderschnecke (36) weiterleiten.

8. Flachsilofräse nach einem der Ansprüche 1 bis 7, dadurch gekennzeichnet, daß die Fräseinrichtung (2), insbesondere der Träger (30) derselben, an beiden Enden mit Antriebsschleifen (53, 54, 57 bzw. 60, 61) verbunden ist, die über Umlenkrollen (55, 56) geführt sind.

9. Flachsilofräse nach Anspruch 8, dadurch gekennzeichnet, daß je eine Umlenkrolle (55 bzw. 56) im Bereich der Unterkante und der Oberkante der Abschlußwand (10) angeordnet ist und

daß je eine Antriebsschleife (53, 54, 57 bzw. 60, 61) im Bereich der Längskanten der Abschlußwand (10) angebracht ist.

10. Flachsilofräse nach Anspruch 8 und 9, dadurch gekennzeichnet, daß die beiden oberen Umlenkrollen (55) auf einer gemeinsamen, am Gerätegestell (1) gelagerten Welle (58) drehfest angeordnet sind und

daß diese Welle zusätzlich ein Abtriebszahnrad (59) trägt, welches über eine Antriebskette (62), Zwischenzahnräder (63, 64) und eine weitere Antriebskette (65) mit dem Antriebszahnrad (66) eines Elektromotors (67) gekoppelt ist.

11. Flachsilofräse nach Anspruch 1, dadurch gekennzeichnet, daß als Fördereinrichtung (20) ein Förderband verwendet ist, das in der Breite auf die Breite des Sammelschachtes (11) abgestimmt ist,

daß dieses Förderband über eine seiner Umlenkwellen (21) im Bereich der Abschlußwand (10) und im unteren Bereich des Sammelschachtes (11) schwenkbar aufgehängt ist und

daß das der Abschlußwand (10) abgekehrt aus dem Sammelschacht (11) schräg nach oben ragende Förderband über einen Seilzug (24, 26) und eine Seiltrommel (27) in seiner Neigung zur Standfläche des Gerätegestelles (1) einstellbar ist.

12. Flachsilofräse nach einem der Ansprüche 1 bis 11, dadurch gekennzeichnet, daß das Gerätegestell (1) mit Rädern (15, 16) fahrbar ausgestaltet ist und

daß zumindest ein Teil dieser Räder (z.B. 16) blockier- und freigebbar sind.

13. Flachsilofräse nach Anspruch 12, dadurch gekennzeichnet, daß ein Teil der Räder (16) an einem Lenkgestell (17) mit Deichsel (18) angebracht sind und

daß diese Räder (16) über ein deichselgesteuertes Gestänge (19) blockier- und freigebbar sind.

**Revendications**

1. Appareil d'abattage de fourrage ensilé par fraisage rectiligne, comprenant un dispositif de fraisage (2), qui peut être déplacé verticalement sur un bâti (1) de cet appareil et un dispositif convoyer (20), qui évacue le fourrage abattu, ce dispositif de fraisage couvrant toute la largeur du bâti (1) et pouvant être déplacé vers le haut et vers le bas devant une cloison extrême verticale (10) dudit bâti, appareil caractérisé en ce que la cloison (10) forme dans sa partie médiane un puits collecteur (11), dans lequel le dispositif convoyer (20) est monté perpendiculairement à cette cloison (10), le dispositif de fraisage (2) portant, en avant de ce puits (11), des palettes (35) de fraisage et de projection auxquelles se raccordent, de chaque côté de ce dispositif de fraisage (2), des vis (36, 37) de fraisage et de transport, qui sont orientées en sens inverses et qui transportent le fourrage abattu en direction de ces palettes (35).

2. Appareil selon la revendication 1, caractérisé en ce que les palettes (35) de fraisage et de projection et les vis (36, 37) de fraisage et de transport sont montées sur un arbre continu (51) dont les extrémités tourillonnent dans des bras de support (43, 48), ces bras (43, 48) portant des blocs coulissants (44, 46), qui sont guidés et peuvent se déplacer verticalement dans des rails (12) à section en U du bâti (1) de l'appareil.

3. Appareil selon la revendication 2, caractérisé en ce que les rails (12) renforcent les bords verticaux extérieurs de la cloison (10), les ouvertures de leurs évidements étant orientées vers l'extérieur.

4. Appareil selon l'une quelconque des revendications précédentes, caractérisé en ce que les deux bras de support (43, 48) sont reliés au moyen d'une traverse (30) sur laquelle est fixé un moteur électrique (31); en ce qu'une roue dentée menante (32) est calée sur l'arbre de ce moteur (31); en ce qu'une roue dentée mené (34) est calée sur l'arbre (51) du dispositif de fraisage (2) et en ce que cette roue menante (32) et cette roue menée (34) sont reliés par une chaîne d'entraînement (33).

5. Appareil selon l'une quelconque des revendications 2 à 4, caractérisée en ce que les extrémités de l'arbre (51) sont logées dans des paliers (40, 49) qui sont fixés aux bras de support (43, 48).

6. Appareil selon l'une quelconque des revendications 2 à 5, caractérisé en ce que les bras de support (43, 48) sont décalés ou déformés vers le milieu du dispositif de fraisage (2), les vis (36, 37) de fraisage et de transport étant prolongées à leurs extrémités et le long de leur périphérie par des éléments de fraisage (38, 39) qui recouvrent les paliers (40, 49) respectifs de l'arbre (51).

7. Appareil selon l'une quelconque des revendications 2 à 5, caractérisé en ce que la chaîne d'entraînement (33) est équipé d'éléments (50) de fraisage et de transport, qui recouvrent cette chaîne (33), la roue dentée menée (34) et son coussinet (52) et qui transfèrent le fourrage qu'ils abattent à la vis adjacente (36) de fraisage et de transport.

8. Appareil selon l'une quelconque des revendications précédentes, caractérisé en ce que le dispositif de fraisage (2), et plus précisément sa traverse (30), est relié par ses deux extrémités à des boucles d'entraînement (53, 54, 57; 60, 61) qui passent sur des poulies de renvoi (55, 56).

9. Appareil selon la revendication 8, caractérisé en ce que les poulies de renvoi (55, 56) sont disposées respectivement au bord inférieur et au bord supérieur de la cloison (10), chacune des boucles (53, 54, 57; 60, 61) étant disposée près du bord longitudinal respectif de cette cloison (10).

10. Appareil selon les revendications 8 et 9 prises ensemble, caractérisé en ce que les deux poulies de renvoi supérieures (55) sont montées sur un arbre commun (58) dont elles sont solidaires en rotation et qui tourillonne dans le bâti (1) de l'appareil, cet arbre (58) portant encore une roue dentée menée (59) qui est reliée à la roue dentée menante (66) d'un moteur électrique (67) par une chaîne (62), des roues dentées intermédiaires (63, 64) et une autre chaîne (65).

11. Appareil selon la revendication 1, caractérisé en ce que le dispositif convoyer (20) est un convoyer à bande, dont la largeur correspond à celle du puits collecteur (11), ce convoyeur étant articulé sur l'un ses arbres de renvoi (21) situé près de la cloison (10) et de la partie inférieure de ce puits (11) et en ce que l'inclinaison par rapport à la surface d'appui du bâti (1), de ce convoyer, qui part obliquement vers le haut dudit puits (11) en s'éloignant de la cloison (10), peut être réglée au moyen d'un câble de traction (24, 26) et d'un tambour d'enroulement (27).

12. Appareil selon l'une quelconque des revendications précédentes, caractérisé en ce que le bâti (1) est mobile grâce à des roues (15, 16), dont certaines (16 par exemple) peuvent être immobilisées et libérées.

13. Appareil selon la revendication 12, caractérisé par le fait que certaines (16) des roues sont montées sur un châssis orientable (17) à timon (18), ces roues (16) pouvant être immobilisées ou libérées au moyen d'un tringlage (19) commandé par ce timon (18).

**Claims**

1. Flat silage cutter comprising a cutting device (2), and a conveying device (20) for transporting the cut silage, both vertically adjustable on an equipment carriage (1), with said cutting device (2) extending throughout the entire width of said equipment carriage (1) and capable of being moved up and down in front of the vertical end plate (10) of said carriage (1), characterized in that said end plate (10) in its center part is designed as a collecting chute (11) with a conveying device (20) being arranged therein which is directed vertically in relation to said end plate (10), and that said cutting device (2) in front of said collecting chute (11) is provided with cutting and centrifuging blades (35) which are followed on both sides of said cutting device (2) by oppositely directed (oriented) cutting and conveying worms (36, 37) aimed at conveying the cut silage in direction toward said cutting and centrifuging blades (35).

2. A flat silage cutter as claimed in claim 1, characterized in that both said cutting and centrifuging blades (35) and said cutting and conveying worms (36, 37) are seated on a continuous shaft (51) the ends of which are pivotally mounted to end cover plates (43, 48), with said end cover plates (43, 48) being provided with sliding pads (44, 46) which are guided in a vertically adjustable manner within U-shaped guide rails (12) on said equipment carriage (1).

3. A flat silage cutter as claimed in claim 2, characterized in that said guide rails (12) serve to strengthen the vertical outer edges of said end plate (10) and are directed outwardly with their open pad-receiving sides.

4. A flat silage cutter as claimed in any one of claims 1 to 3, characterized in that said two end cover plates (43, 48) are joined to one another by means of a supporting beam (30), that an electromotor (31) is mounted on said supporting beam (30), that a drive gear (32) is fixed torsion-proof to the driving shaft of said electromotor (31), that a driven gear (34) is fixed torsion-proof to said shaft (51) of said cutting device (2), and that both said drive gear (32) and said driven gear (34) are coupled to one another via a drive chain (33).

5. A flat silage cutter as claimed in claims 2 to 4, characterized in that the ends of said shaft (51) are pivotally mounted in bearings (40, 49) secured on said end cover plates (43, 48).

6. A flat silage cutter as claimed in any one of claims 2 to 5, characterized in that said end cover plates (43, 48) are staggered toward the center of said cutting device (2), and that said cutting and conveying worms (36, 37), at their end ranges, end up circumferentially in cutting elements (38, 39) of which each overlaps the respective, associated bearing (40, 49) of said shaft (51).

7. A flat silage cutter as claimed in any one of claims 2 to 5, characterized in that said drive chain (33) is provided with cutting and conveying elements (50) which overlap said drive chain (33) as well as said driven gear (34) and its bearing bush (52), and serve to feed the cut silage to the adjoining cutting and conveying worm (36).

8. A flat silage cutter as claimed in any one of claims 1 to 7, characterized in that said cutting device (2), and more particularly the supporting beam (30) thereof is connected at both ends with driving loops (53, 54, 57 or 60, 61 respectively) which are led over guide pulleys (55, 56).

9. A flat silage cutter as claimed in claim 8, characterized in that one of said guide pulleys (55 or 56) each is arranged within the area of the upper and the lower edge of said end plate (10), and that one each of said driving loops (53, 54, 57 or 60, 61) is arranged within the area of the longitudinal edges of said end plate (10) respectively.

10. A flat silage cutter as claimed in claims 8 and 9, characterized in that the two upper ones of said guide pulleys (55) are arranged torsion-proof on a shaft (58) common to both, which is supported on said equipment carriage (1), and that said shaft additionally carries a driven gear (59) which, via a drive chain (62), the intermediate gears (63, 64) and a further drive chain (65), is coupled to the drive gear (66) of an electromotor (67).

11. A flat silage cutter as claimed in claim 1, characterized in that as said conveying device (20) there is used a belt conveyor which is adapted in its width to that of said collecting chute (11), that said belt conveyor, via one of its guide rollers (21), is slewably suspended within the range of said end plate (10), and within the range, i.e. the lower range of said collecting chute (11), and that said belt conveyor which, by not facing said end plate (10) extends from said collecting chute (11) slantingly in the upward direction, is capable of being adjusted in regard to its inclined position toward the base of said equipment carriage (1), by means of a hoisting rope (24, 26), as led around a rope drum (27).

12. A flat silage cutter as claimed in any one of claims 1 to 11, characterized in that said equipment carriage (1) is designed to be movable with the said of wheels (15, 16), and that at least some of said wheels (e.g. 16) are capable of being locked and unlocked.

13. A flat silage cutter as claimed in claim 12, characterized in that some of said wheels (16) are attached to a steering control member (17) to which a drawbar (18) is connected, and that said wheels (16) are capable of being locked and unlocked via a drawbar-controlled rodding (19).

Fig.1

Fig.2

0 001 202

Fig. 3

0 001 202